Europäisches Patentamt

(19) European Patent Office

Office européen des brevets

(11) Publication number: **0 000 653**
A1

(12) **EUROPEAN PATENT APPLICATION**

(21) Application number: 78300179.5

(22) Date of filing: 21.07.78

(51) Int. Cl.²: **B 60 R 1/08**, B 60 R 1/02, G 05 D 3/02

(30) Priority: 21.07.77 GB 30687/77

(43) Date of publication of application:
07.02.79 Bulletin 79/3

(84) Designated contracting states:
BE CH DE FR NL SE

(71) Applicant: Wainwright, Basil Earle
80 Greenaleigh Road Yardley Wood
Birmingham, B14 4JE. (GB)

(72) Inventor: Wainwright, Basil Earle
80 Greenaleigh Road Yardley Wood
Birmingham, B14 4JE. (GB)

(74) Representative: Milhench, Howard Leslie et al
A.A. Thornton & Co.
Northumberland House 303/306 High Holborn
London, WC1V 7LE. (GB)

(54) Rear view mirrors.

(57) A motor vehicle rear view mirror has a mirror or glass which pivots automatically from a normal position to an antiglare position in response to headlight glare. The glass (8) is mounted between a front frame (6) and a back plate (4) of a two part housing (2) and carries a magnetic member for cooperating with a solenoid coil (16) of an electrical assembly. The electrical assembly (12) is formed as a single unit mounted in the back plate (4) and includes a photosensor (14) receiving light through a partly silvered region of the mirror glass (8). A signal from the photosensor is amplified by one or more transistors to energise the solenoid coil (16). A pair of switch contacts (116) are actuated when the mirror glass (8) changes its position to the antiglare position and are arranged to reduce current flow in the coil to a level just sufficient to hold the mirror glass in the antiglare position. The rear of the mirror housing is coupled to a mounting arm (22) by a ball (38) and socket joint (36), the socket (36) comprising an elongate bore (42) having an inwardly tapering section to receive balls of various diameters. A locking member (48) is secured in the bore in order to retain the ball in the bore.

FIG.2.

EP 0 000 653 A1

Croydon Printing Company Ltd.

0000653

- 1 -

<u>Rear View Mirrors</u>

This invention relates to a rear view mirror for a motor vehicle which is movable automatically between a normal viewing position and an anti-glare position in which glare from light reflected from the mirror is reduced.

Such automatically adjusting rear view mirrors are known and it is an object of the present invention to provide such a rear view mirror of a construction which is simple and inexpensive to manufacture.

According to the present invention there is provided a rear view mirror for a motor vehicle, the mirror comprising a housing containing a mirror glass pivotally mounted so as to be movable between a normal viewing position and an anti-glare position in which glare from light reflected from the mirror is reduced, an electrical assembly formed as a single unit and mounted within the housing for moving the mirror glass, said assembly including a photosensor for detecting light incident on the mirror and means coupling said photosensor to a solenoid coil for energizing the coil in response to incident light above a predetermined intensity, said mirror glass carrying means which co-operates with said coil when energized whereby to move the mirror glass from said normal position to said anti-glare position.

By providing in accordance with the invention said electrical assembly as a single unit which is mounted within the housing it is possible substantially to reduce manufacturing costs since the housing and electrical assembly may be manufactured separately and subsequently assembled.

Preferably the housing is formed as a two part housing comprising a back plate part in which the unitary electrical assembly is mounted and a front part forming a frame for the mirror glass. The two parts of the housing are preferably formed as plastics mouldings but may if desired be formed as metal parts. Preferably the two parts are provided with mechanically interengaging means, for example studs engaging in recesses to secure the two parts together. All this lends itself to simplicity in manufacture.

Preferably for ease of assembly of the mirror, the mirror glass is located between the back plate and front frame and the two parts of the housing co-operate to define a recess which receives the bottom edge of the mirror glass to support the mirror glass and to permit pivotal movement of the mirror glass. The bottom edge of the mirror glass may carry a cylindrical element movable within the recess of the housing to facilitate pivotal movement of the mirror glass. A pivot for the mirror glass is preferably provided by a frame member of the solenoid engaging said co-operating means and spring means biasing said frame member into engagement with said co-operating means.

It is preferred in order to retain the mirror in normal use in the normal position and to prevent vibration from altering the position of the mirror to arrange said spring biasing means for biasing the mirror glass towards the normal position.

A holding circuit may be provided in said electrical assembly coupled with the solenoid coil for reducing the level of energization of the coil from its initial energization to a level sufficient to maintain the mirror in the anti-glare position.   Such holding circuit may include a pair of electrical contacts operated by coil energization either to short out part of the solenoid coil or to switch in a series resistance with the coil.

A mounting arm may be coupled to the housing, the mounting arm providing at its free end a plane surface whereby the mounting arm may be secured by an adhesive bond to a plane surface of the motor vehicle in order to provide a secure mounting of the mirror to such plane surface.

The mounting arm is preferably coupled to the housing by a ball and socket joint.   A socket formed on the housing preferably comprises an elongate bore which tapers inwardly in order to accommodate balls of different sizes such as may occur in motor vehicles having mounting arms already installed.   A locking member may be positioned within the bore after insertion of the ball member into the bore in order to retain the ball member within the bore.   The locking member may be secured in position by fixing screws engaging in registering apertures in the locking member and the housing.   As an alternative, the locking member may be a force fit within the bore so that the positioning of the locking member serves to secure the locking member.

Thus in a further aspect the invention provides a rear view mirror for a motor vehicle comprising a housing containing a mirror glass and a mounting arm for coupling to said housing, said mounting arm carrying a ball member engageable within a socket provided by said housing, said socket comprising an elongate bore whose diameter decreases in an inward direction, and a locking member for securing said ball member within the socket and arranged to be secured within the bore.

A preferred embodiment of the invention will now be described with reference to the accompanying drawings wherein:-

Figure 1 is a front elevation of a preferred embodiment of a rear view mirror according to the invention, with the mirror glass partly broken away to show internal details of the mirror;

Figure 2 is a cross-sectional view of the mirror taken along the line II-II of Figure 1, the mirror glass being shown in the normal viewing position;

Figure 3 is an exploded sectional view of the mirror along the line II-II of Figure 1, the mirror glass being shown in the anti-glare position;

Figure 4 is an exploded view on an enlarged scale of a ball and socket joint at the rear of the mirror housing coupling a mounting arm to the mirror;

Figure 5 is a circuit diagram of the electrical assembly of the mirror; and

Figure 6 is a circuit diagram of an alternative form of electrical assembly for the mirror.

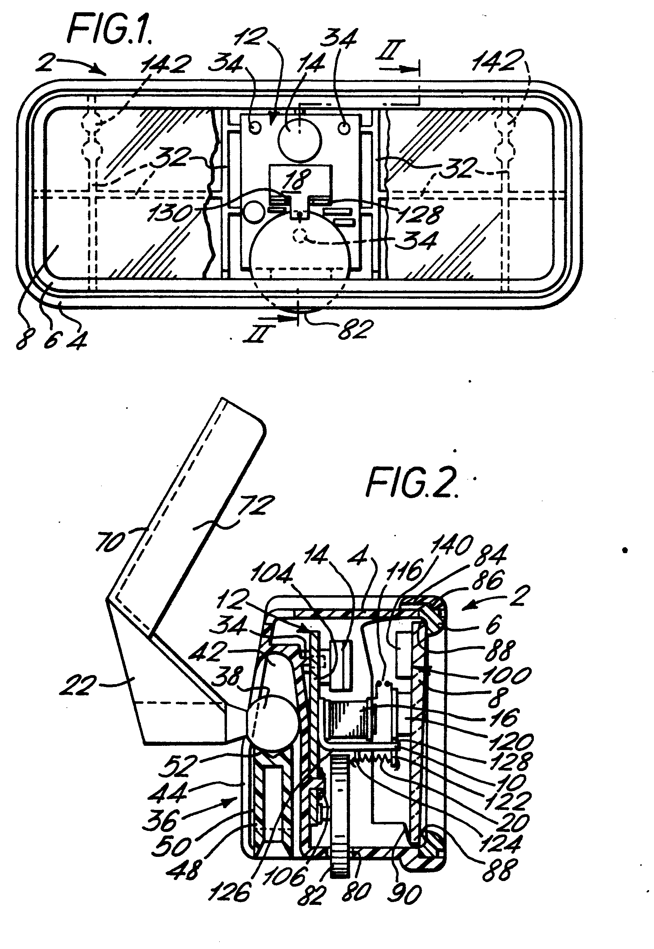

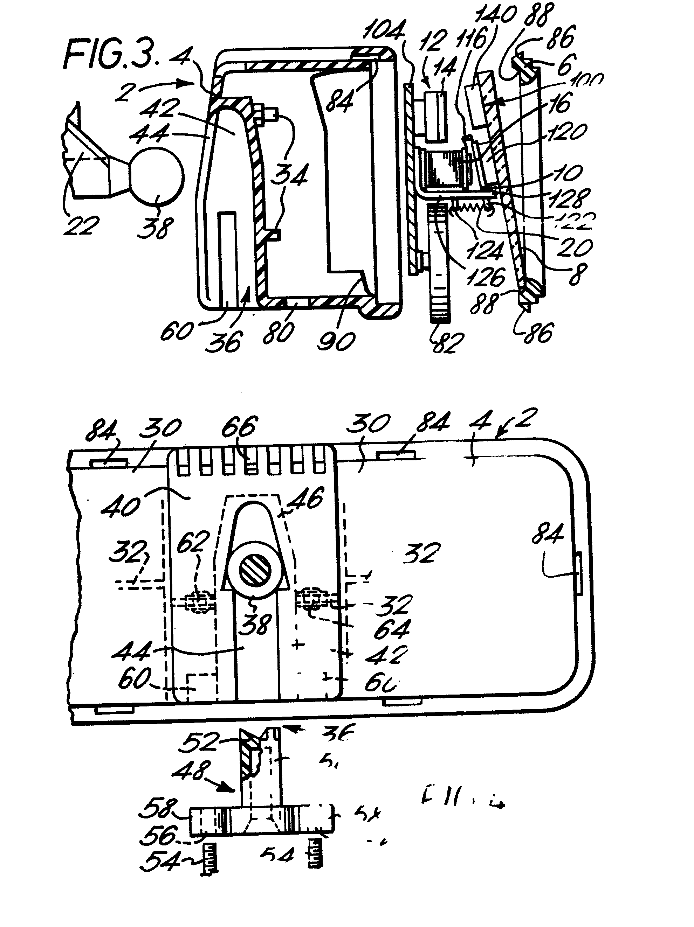

Referring to the drawings there is shown a rear view mirror comprising a housing 2 formed as a plastic moulding in two parts, namely a back plate part 4 and a front frame part 6. Located between the two parts of the housing is a mirror glass 8 movable between a normal viewing position (Figure 2) and an anti-glare position (Figure 3) in which glare from light reflected from the mirror is reduced. The mirror is pivotable about a pivot 10. An electrical assembly 12 formed as a single unit is mounted within back plate 4. The assembly includes a photosensor 14 which receives light incident upon the mirror and transmitted through mirror glass 8. The assembly also includes a solenoid coil 16 which is energized in response to light incident upon the mirror above a predetermined intensity, the coil co-acting with a magnetic member 18 carried by the mirror glass to move the mirror glass from its normal position to an anti-glare position when the solenoid is energized. The mirror glass is held in its normal position in normal operation by means of a return spring 20. The mirror is mounted to the motor vehicle by means of a mounting arm 22 attached to the rear of the housing 2.

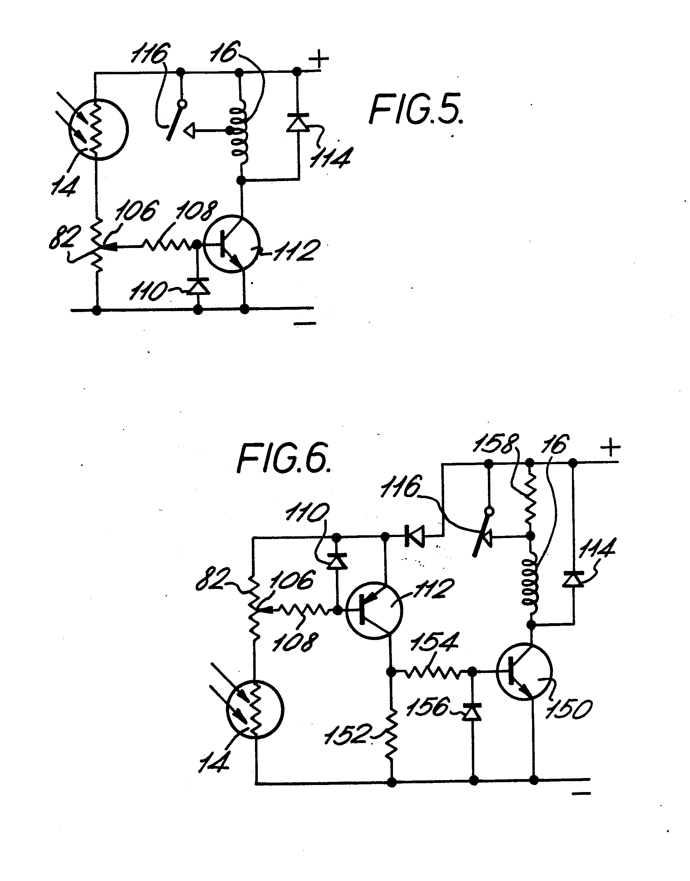

Referring now in more detail to the construction of the housing, back plate 4 is in the form of a tray with rear walls 30 (Figure 4) tapering to provide a deepened portion at the centre of the tray. Reinforcing ribs 32 are provided for strengthening the tray and the centre of the tray carries three fixing studs 34 to retain the electrical assembly 12. The rear of the back plate provides a socket 36 of a ball and socket joint which serves to receive a ball member 38 of mounting arm 22. Mounting arm 22 is thus held mounted to back plate 4 by means of a universal ball and socket joint. Socket 36 is designed to permit various configurations of mounting arms having different size end portions to be mounted to the back plate. Referring to the construction of socket 36 as shown in Figure 4, a boss portion 40 at the rear of the back plate has a vertical bore 42 of circular section which communicates with a slot 44 in the surface of the boss to permit the mounting arm 22 to extend from the bore 42. The top portion of the bore 42 is tapered as at 46 to permit ball joints of different sizes to make a good fit with the bore. This may occur where a motor vehicle has already installed an appropriate mounting arm. A locking member 48 is provided having a cylindrical portion 50 making a reasonably close fit within bore 42 and having a recessed top portion 52 providing a seat for ball 38. Locking member 48 is locked in position by means of two self tapping screws 54 extending through apertures 56 in wing portions 58 of locking member 48. Wing portions 58 are arranged to fit within recesses 60 of boss 40 and screws 54 extend into the interior of back plate 4 to extend through registering apertures 62 in a reinforcing rib 32. Apertured spring steel clips 64 are mounted over apertures 62 in order to receive screws 54 and to engage the threads thereof so that screws 54 can be tightened to secure the locking member 48. The top of boss 40 has a ribbed surface 66. Mounting arm 22 shown has a flat surface 70 which may be adhesively mounted by means of an adhesive pad to the window of a motor vehicle. Reinforcing ribs 72 are provided on the other side of surface 70 in order to strengthen the surface and to prevent warping.

The front surface of back plate member 4 has at its base an aperture 80 through which part of the electrical assembly, a sensitivity adjustment thumb-wheel 82, projects. The front surface of back plate 4 has apertures 84 spaced around the surface which serve in the securing of the front frame 6 to back plate 4.

Front frame 6 is generally rectangular in configuration and possesses projecting nodules 86 around its periphery which interengage with recesses 84 in back plate 4 as a snap fit in order to secure together back plate 4 and front frame 6. Front frame 6 has a recessed portion 88 in order to receive mirror glass 8. A further recessed portion 90 extends along the lower edge of the front of back plate 4 and co-operates with recess 88 in order to provide a longitudinal U-shaped recess. This U-shaped recess serves to support the lower edge of mirror glass 8 and to permit the mirror glass to pivot about pivot 10. As an alternative arrangement, recess 88 and recess 90 may be shaped to provide a recess circular in section and a cylindrical element may be provided to fit within the recess and to support the mirror glass 8, the lower edge of the mirror glass fitting within an axial slot in the cylindrical element.

Mirror glass 8 is of conventional construction. Mirror glass 8 is only partly silvered in the region 100 opposite photosensor 14 by providing a series of transparent lines in order to permit incident light to be transmitted through the mirror to photosensor 14. This arrangement provides a collimation effect for light passing through the mirror on to photosensor 14 and this renders the mirror more sensitive to light from headlamps of vehicles behind the motor vehicle containing the rear view mirror as compared with other lights for example courtesy lights within the motor car or street lighting.

The electrical assembly 12 is formed as a single unit and includes a board 104 upon which the other elements of the assembly are mounted. The board has apertures registering with studs 34 in order to secure the assembly to back plate 4. Locking clips 106 are provided to fit on studs 34. The assembly is powered from a suitable circuit (e.g. sidelight circuit) energized by the vehicle battery and leads will be fed through the back plate 4 in a suitable manner. Photosensor 14 which may comprise a photodiode is connected (see Figure 5) to a potentiometer in the form of a thumb-wheel 82 which regulates the sensitivity of the electrical assembly, i.e. the thumb-wheel 82 predetermines the intensity of light incident upon the photosensor 14 at which the electrical assembly will be actuated to move the mirror to the anti-glare position. The movable contact 106 of thumb-wheel 82 is connected by a series resistance 108 and a reverse biased diode 110, connected between resistor 108 and ground, to the base of a transistor 112. The collector circuit of transistor 112 includes solenoid coil 16. A protection diode 114 is connected across solenoid coil 16. Solenoid coil 16 has a centre tapping which is connected to contacts 116.

Contacts 116 are closed when glass 8 is moved to the anti-glare position and are shown schematically in Figures 2 and 3.

As can be seen in Figures 2 and 3 the physical disposition of the electrical assembly is such that the core of the solenoid 16 is disposed remote from magnetic member 18 in the normal rest position of the mirror. Magnetic member 18 is secured to the rear of mirror glass 8 by means of an adhesive pad 120 and the mirror glass is retained in the rest position by a return spring 20 coupled between an aperture in a depending tine 122 of magnetic member 18 and a tine 124 of an upstanding member 126. The edge 128 of member 126 remote from board 104 has a recess 130 to receive tine 122 which engages the base of the recess in order to provide said pivot 10 for the mirror.

Pads 140 adhesively secured to the mirror glass 8 are arranged to engage reinforcing ribs as at 142 in order to provide a buffer when mirror glass 8 moves to the anti-glare position.

In operation of the rear view mirror light from headlamps of a vehicle approaching the motor vehicle in which the rear view mirror is mounted may cause light to be incident upon the rear view mirror and this light will be transmitted to the photosensor 14. If the intensity of the light is above a level determined by the setting of potentiometer 82, sufficient current will be generated in resistor 108 to switch transistor 110 from its normal non-conductive state to a fully conductive state. This causes energizing current to flow in the solenoid 16, which creates an electromagnetic field to attract magnetic member 18 and to thus move mirror glass 8 about pivot 10 to the anti-glare position (Figure 3) in which the amount of light reflected from the mirror glass to the driver of the vehicle is reduced. Now the amount of current required to flow in the solenoid coil to move the mirror to the anti-glare position is considerably more than that required to hold the mirror in the anti-glare position. Accordingly when mirror glass 8 moves to the anti-glare position, contacts 116 are closed which has the effect of shorting out part of coil 16 and thus causing a reduced current flow in the solenoid. This current flow is sufficient to hold the mirror glass in the anti-glare position for as long as light above the predetermined intensity shines on the mirror glass. Reduction of the current flow through the solenoid coil permits a longer life expectancy for the components of the circuit assembly.

In the alternative form of electrical assembly shown in Figure 6, parts similar to those of Figure 5 are indicated by similar reference numerals. Transistor 112 serves to amplify the current generated in resistor 108 and a main switching transistor 150 is coupled to the collector circuit of transistor 110 via resistors 152, 154 and diode 156. Coil 16 is connected in the collector circuit of transistor 150 together with a series resistor 158. Contacts 116 which are closed in the normal position of mirror glass 8 are connected across resistor 158. This alternative form has a higher sensitivity to incident light by virtue of the amplification provided by transistor 110. When the coil 16 is energized to move mirror glass to the anti-glare position, contacts 116 are opened so that resistor 158 is switched into coil 16 in order to reduce current flow through coil 16 and provide a holding current.

CLAIMS:

1.      A rear view mirror for a motor vehicle, the
mirror comprising a housing containing a mirror glass
pivotally mounted so as to be movable between a normal
viewing position and an anti-glare position in which
glare from light reflected from the mirror is reduced,
an electrical assembly formed as a single unit and mounted
within the housing for moving the mirror glass, said assembly including a photosensor for detecting light incident
on the mirror and means coupling said photosensor to a
solenoid coil for energizing the coil in response to
incident light above a predetermined intensity, said
mirror glass carrying means which co-operates with said
coil when energized whereby to move the mirror glass from
said normal position to said anti-glare position.

2.      A rear view mirror as claimed in claim 1
wherein said housing is formed as a two part housing comprising a back plate part in which said unitary electrical
assembly is mounted and a front part forming a frame for
said mirror glass.

3.      A rear view mirror as claimed in claim 2 wherein
said back plate and front frame carry mechanically interengaging means securing said back plate and said front
frame together.

4.      A rear view mirror as claimed in claim 2 wherein
said mirror glass is located between said back plate and
said front frame.

5.      A rear view mirror as claimed in claim 4 wherein
said back plate and front frame co-operate to provide a
recess which receives a bottom edge of said mirror glass to support and permit pivotal movement of said mirror glass.

6. A rear view mirror as claimed in claim 1 wherein a pivot for the mirror glass is provided by a member extending from said electrical assembly and engaging said co-operating means.

7. A rear view mirror as claimed in claim 1 including spring biasing means coupled to said mirror glass for biasing said mirror glass towards said normal position.

8. A rear view mirror as claimed in claim 1 wherein said electrical assembly includes a holding circuit which after initial energization of said coil arising from light above a predetermined intensity being incident on said photosensor acts to reduce the level of energization of the coil and includes switch contacts operated by said initial coil energization.

9. A rear view mirror as claimed in claim 1 including a mounting arm for coupling to said housing, said mounting arm providing at its free end a plane surface whereby the mounting arm may be secured by an adhesive bond to a plane surface of a motor vehicle.

10. A rear view mirror as claimed in claim 10 including a mounting arm for coupling to said housing, said mounting arm carrying a ball member engageable within a socket provided by said housing, said socket comprising an elongate bore whose diameter decreases in an inward direction, and a locking member for securing said ball member within the socket and arranged to be secured within the bore.

11.      A rear view mirror as claimed in claim 10 including means for securing said locking member in said bore comprising one or more screw members engaging registering apertures in said locking member and said housing.

12.      A rear view mirror for a motor vehicle comprising a housing containing a mirror glass and a mounting arm for coupling to said housing, said mounting arm carrying a ball member engageable within a socket provided by said housing, said socket comprising an elongate bore whose diameter decreases in an inward direction, and a locking member for securing said ball member within the socket and arranged to be secured within the bore.

13.      A rear view mirror as claimed in claim 12 including means for securing said locking member in said bore comprising one or more screw members engaging registering apertures in said locking member and said housing.

14.      A rear view mirror as claimed in claim 12 wherein said mounting arm carries at its free end a plane surface whereby the mounting arm may be secured by an adhesive bond to a plane surface of a motor vehicle.

15.      A rear view mirror as claimed in claim 12 wherein said housing is formed as a two part housing comprising a back plate part and a front part forming a frame for said mirror glass.

16.      A rear view mirror as claimed in claim 15 wherein said back plate and front frame carry mechanically interengaging means securing said back plate and said front frame together.

FIG.1.

FIG.2.

FIG.3.

0000653

FIG.5.

FIG.6.

C000653

| Category | Citation of document with indication, where appropriate, of relevant passages | Relevant to claim |
|---|---|---|
| X | DE - C - 1 105 297 (GENERAL MOTORS)<br>* Entirely * | 1-8, 10,15, 16 |
| X | DE - A - 2 133 182 (PAUL)<br>* Claims * | 1 |
| X | AT - B - 321 132 (GRELL)<br>* Figure 13; claims 1,2; figures 9,10 *<br>& GB - A - 1 346 483 | 1,10, 12 |
| X | FR - A - 1 463 007 (CHIPOFF ET PERRIER)<br>* Figures 2,3 * | 1,5,7 |
| | DE - A - 2 423 258 (SIEMENS)<br>* Page 1, lines 15-24; page 2, lines 1-9 * | 8 |

**CLASSIFICATION OF THE APPLICATION (Int. Cl.²)**

B 60 R 1/08
B 60 R 1/02
G 05 D 3/02

**TECHNICAL FIELDS SEARCHED (Int.Cl.²)**

B 60 R 1/02
B 60 R 1/08
G 05 D 3/00
G 05 D 3/02
H 01 H 47/04

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| Berlin | 24-10-1978 | BEYER |

EPO Form 1503.1   06.78